# EUROPÄISCHE PATENTSCHRIFT

(11) **EP 2 627 426 B1**
(45) Veröffentlichungstag und Bekanntmachung des Hinweises auf die Patenterteilung: **20.05.2015**
(21) Anmeldenummer: 11758187.6
(22) Anmeldetag: 14.09.2011
(51) Int. Cl.: B01D 21/00, B01D 21/02, B01D 21/24

(54) **VORRICHTUNG ZUR ABSCHEIDUNG VON SCHWEBSTOFFEN**
DEVICE FOR PRECIPITATING SUSPENDED MATERIALS
DISPOSITIF POUR SÉPARER DES SUBSTANCES EN SUSPENSION

(30) Priorität: 11.10.2010 DE 102010047904
(43) Veröffentlichungstag der Anmeldung: 21.08.2013
(73) Patentinhaber: BDT GmbH, Gesellschaft für Gerätetechnik, 77656 Offenburg (DE)
(72) Erfinder: STEMMER, Ditmar, 77704 Oberkirch (DE)
(74) Vertreter: Reule, Hanspeter
(86) Internationale Anmeldenummer: PCT/EP2011/065931
(87) Internationale Veröffentlichungsnummer: WO 2012/048978

(56) Entgegenhaltungen:
- DE-A1- 1 442 461
- DE-C- 644 173
- DE-U1- 29 621 590
- DE-U1-202010 014 091
- US-A- 4 377 017

## Beschreibung

Die Erfindung betrifft eine Vorrichtung zur Abscheidung von Schwebstoffen aus einer Flüssigkeit gemäß Oberbegriff des Anspruchs 1.

Aus der DE 296 21 590 U1 ist eine Abscheidevorrichtung bekannt, die einen Behälter aufweist, der durch vier Trennwände in vier Kammern unterteilt ist. Nach oben hin ist der Behälter durch einen Deckel verschlossen, der auf einer ersten Trennwand aufliegt. Die zusammen mit der ersten Trennwand die erste Kammer begrenzende zweite Trennwand ist etwas niedriger als die erste Trennwand, so dass ihre Oberkante im Abstand zum Deckel angeordnet ist. Die dritte Trennwand, die zusammen mit der zweiten Trennwand die zweite Kammer begrenzt, ist wiederum etwas niedriger als die zweite Trennwand, die vierte Trennwand ist wiederum niedriger als die dritte Trennwand. Die mit Schwebstoffen verunreinigte Flüssigkeit, insbesondere mit Gipsresten verunreinigtes Abwasser eines Zahntechniklabors, wird über einen Flüssigkeitseinlass in die erste Kammer geleitet. Ist die erste Kammer gefüllt, so fließt weiteres Wasser von der ersten Kammer über die Oberkante der zweiten Trennwand in die zweite Kammer. Ist die zweite Kammer gefüllt, so fließt weiteres Wasser über die Oberkante der dritten Trennwand in die dritte Kammer, bei deren vollständiger Füllung über die Oberkante der vierten Trennwand in die vierte Kammer. In jeder der Kammern lagern sich die Schwebstoffe ab, bis schließlich in die vierte Kammer fließendes Wasser zu einem hohen Grad von Schwebstoffen befreit und damit vorgereinigt ist. Aus der vierten Kammer wird das vorgereinigte Wasser mittels eines Flüssigkeitsauslasses abgeleitet. Diese Gipsabscheidevorrichtung hat sich in der Praxis bereits hervorragend bewährt und führt zu einer Abscheidung von bis zu 70% von in eingeleitetem Wasser enthaltenen Gipsschwebstoffen.

Eine Vorrichtung der eingangs genannten Art ist aus der US 4 377 017 A bekannt. Bei dieser Vorrichtung handelt es sich um eine Maschine zur Reinigung von Fußböden, bei der die Reinigungsflüssigkeit wieder verwendet werden soll. Zu diesem Zweck wird die Reinigungsflüssigkeit nach Gebrauch in einen Behälter eingeleitet, der mehrere Kammern aufweist. Die Kammern weisen in Draufsicht eine quadratische Form auf und sind in zwei Reihen angeordnet. Die Flüssigkeit wird durch die Kammern geleitet, indem jede Kammer mit einer in Fließrichtung auf sie folgenden Kammer mittels einer Öffnung verbunden ist. Die Flüssigkeit wird im Zick-Zack von einer Kammer zur nächsten geleitet, wobei sie von der ersten Kammer der ersten Reihe zur ersten Kammer der zweiten Reihe, von dieser in die zweite Kammer der zweiten Reihe und von dieser in die zweite Kammer der ersten Reihe fließt und so fort. Jede der Öffnungen ist in Fließrichtung gesehen immer ein Stück weit weniger vom Boden entfernt als die vorherige Öffnung. Der Aufbau der vorbekannten Maschine ist daher kompliziert.

In der DE 644 173 C ist eine Kläranlage beschrieben, die ein in mehrere Kammern unterteiltes Klärbecken aufweist. Die Unterteilung erfolgt mittels eines in Draufsicht sternförmigen starren Plattensystems.

Es ist daher Aufgabe der Erfindung, eine Vorrichtung der eingangs genannten Art derart weiterzubilden, dass sie einfacher zusammengebaut werden kann.

Die Aufgabe wird erfindungsgemäß mit einer Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass der Abscheidegrad für Schwebstoffe erhöht wird, wenn die Fließgeschwindigkeit der die Schwebstoffe enthaltenden Flüssigkeit von einer Kammer in die darauffolgende Kammer verlangsamt wird. Die Verlangsamung der Fließgeschwindigkeit wird erfindungsgemäß dadurch erzielt, dass die Kammern miteinander mit Öffnungen verbunden sind, die im Abstand zur Oberkante der jeweiligen Trennwand angeordnet sind. Auf diese Weise können die Öffnungen schmal gehalten werden, so dass sie nur eine geringe Höhe aufweisen und die Fließgeschwindigkeit verlangsamen. Dies ist insbesondere dann vorteilhaft, wenn Flüssigkeit schwallartig, beispielsweise durch Entleeren eines Beckens über einen Abfluss, in den Behälter eingeleitet wird und bei einer ungebremsten Weiterleitung von einer Kammer zur nächsten Schwebstoffe wieder aufwirbeln würde, die sich bereits am Boden oder in Bodennähe abgesetzt haben. Denn die vorzugsweise als schmale Spalte ausgebildeten Öffnungen verlangsamen die Fließgeschwindigkeit, so dass gegebenenfalls schon beim Einleiten der Flüssigkeit in den Behälter ein Rückstau entsteht und die Flüssigkeit langsam in die erste Kammer eingeleitet wird.

Zweckmäßig ist die Breite der Öffnungen mindestens fünfmal, vorzugsweise mindestens zehnmal so groß wie ihre Höhe. Dabei wird bevorzugt, dass alle Öffnungen identische Abmessungen aufweisen. Es ist jedoch auch möglich, dass die Öffnungen unterschiedlich groß sind. Desweiteren kann beispielsweise vorgesehen sein, dass die Öffnung zwischen der ersten und der zweiten Kammer zur oberen Kante der zwischen beiden Kammern befindlichen Trennwand randoffen ist.

Die Trennwände sind in der Draufsicht sternförmig angeordnet und erstrecken sich von einer Mittelachse des Behälters bis zu Seitenwänden des Behälters. Zwischen der letzten und der ersten Kammer ist dann eine Trennwand angeordnet, die keine Öffnung aufweist, um ein direktes Einfließen von Flüssigkeit von der ersten Kammer in die letzte Kammer zu vermeiden. Es sind vier Trennwände vorgesehen, wobei jeweils zwei in einem Winkel von 180° zueinander angeordnete Trennwände einstückig zusammenhängen, und wobei die Trennwandpaare mittels senkrecht zwischen den Trennwänden verlaufenden Schlitzen zusammengesteckt sind. Dies ermöglicht einen einfachen Zusammenbau der Trennwände. Dabei wird bevorzugt, dass die Schlitze jeweils über die halbe Höhe der Trennwandpaare verlaufen, und zwar beim einen Trennwandpaar von unten aus und beim anderen Trennwandpaar von oben aus.

Der Behälter weist zweckmäßig einen Deckel auf, der auf den oberen Kanten der Trennwände aufliegt. Dies verhindert ein Überschwappen der Flüssigkeit über die Oberkanten der Trennwände. Wenn der Deckel an seiner Unterseite Profile aufweist, die die oberen Kanten der Trennwände umgreifen, erhält man eine verbesserte Dichtwirkung zwischen dem Deckel und den Trennwänden. Der Behälter ist vorzugsweise mit einer Folie ausgekleidet, in die die Trennwände eingesetzt sind. Die Folie kann dann als Abfallbehälter dienen, um die abgeschiedenen Schwebstoffe zu entsorgen.

Im Folgenden wird die Erfindung anhand eines in der Zeichnung schematischer dargestellten Ausführungsbeispiels näher erläutert. Es zeigen
- Fig. 1: Eine Abscheidevorrichtung für Gips in einer Explosionsdarstellung;
- Fig. 2, 3: zwei Trennwandpaare der Vorrichtung gemäß Fig. 1; und

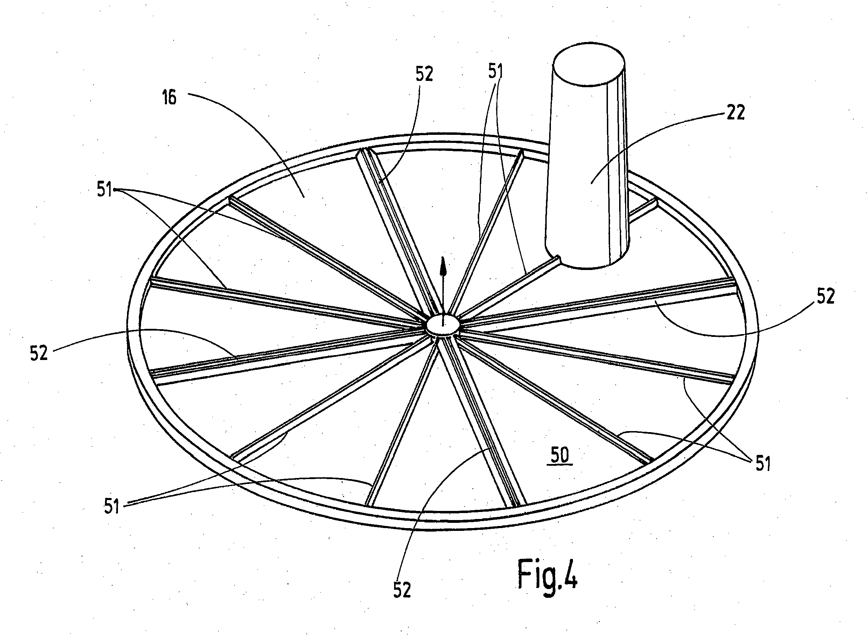

- Fig. 4: den Deckel der Vorrichtung gemäß Fig. 1 in einer Ansicht von unten.

Die in der Zeichnung dargestellte Abscheidevorrichtung 10 weist einen Behälter 12 auf, der ein zylinderförmiges, topfartiges Unterteil 14 mit einem Boden 15 und einen Deckel 16 aufweist. Der Deckel 16 ist mittels eines Spannrings 18 an einem umlaufenden Rand 20 des Unterteils 14 befestigbar. Im Deckel 16 ist ein Einlassstutzen 22 für Flüssigkeit angeordnet, während in der Zylinderwand 24 des Unterteils 14 ein Auslassstutzen 26 angeordnet ist.

In das Unterteil 14 ist eine ebenfalls annähernd zylinderförmige Folie 28 eingesetzt, die das Unterteil 14 auskleidet, und durch die der Auslassstutzen 26 durchgeführt ist. Der Innenraum des Behälters 12 ist mittels vier sich von einer Mittelachse 30 radial nach außen erstreckenden Trennwänden 32, 34, 36, 38 in vier Kammern 40, 42, 44, 46 unterteilt. Der Einlassstutzen 22 befindet sich über der ersten Kammer 40, an die sich im Uhrzeigersinn die weiteren Kammern 42, 44, 46 in dieser Reihenfolge anschließen. Der Auslassstutzen 26 mündet in die letzte Kammer 46.

Der Deckel 16 liegt auf den Oberkanten 48 der Trennwände 32, 34, 36, 38 auf und weist an seiner Unterseite 50 neben Stabilisierungsstreben 51 vier im Querschnitt U-förmige Profile 52 auf, die die Oberkanten 48 umgreifen. Dadurch wird ein Überschwappen von Flüssigkeit über die Oberkanten 48 weitgehend vermieden. Die zweite Trennwand 34 weist im Abstand zu ihrer Oberkante 48 eine die erste Kammer 40 mit der zweiten Kammer 42 verbindende Öffnung in Form eines parallel zur Oberkante 48 verlaufenden langgestreckten Spalts auf. Eine identische Öffnung 54 ist in der dritten Trennwand 36 angeordnet, befindet sich aber in größerem Abstand zur Oberkante 48 als die Öffnung 54 in der zweiten Trennwand 34. In noch größerem Abstand zur Oberkante 48 ist eine identische Öffnung 54 in der vierten Trennwand 38 angeordnet. Die Öffnungen 54 verbinden die Kammern 40, 42, 44, 46 miteinander. Die erste Trennwand 32 weist keine Öffnung auf, so dass zwischen der ersten Kammer 40 und der vierten Kammer 46 keine Verbindung besteht. Die Öffnungen 54 befinden sich somit, in einer Fließrichtung vom Einlassstutzen 22 zum Auslassstutzen 26 betrachtet, in abnehmender Höhe über dem Behälterboden 15.

Wird eine mit Schwebstoffen verunreinigte Flüssigkeit, beispielsweise mit Gips verunreinigtes Abwasser eines Zahntechniklabors oder mit Tonresten verunreinigtes Abwasser einer Töpferei, über den Einlassstutzen 22 in die erste Kammer 40 eingeleitet, so wird diese befüllt, bis das Wasser bis zur Höhe der Öffnung 54 in der zweiten Trennwand 34 steht. Im ruhenden Wasser setzen sich dann die Schwebstoffe nach und nach am Boden oder in Bodennähe ab. Wird weiteres Wasser zugeleitet, so fließt Wasser über die Öffnung 54 in der zweiten Trennwand 34 in die zweite Kammer 42, bis diese bis zur Höhe der Öffnung 54 in der dritten Trennwand 36 befüllt ist, usw. Ist auch die vierte Kammer 46 bis zu einer Höhe gefüllt, in der sich der Auslassstutzen 26 befindet, so wird Wasser über den Auslassstutzen 26 abgeleitet. Zu diesem Zweck befindet sich der Auslassstutzen 26 maximal auf der selben Höhe über dem Behälterboden 15 wie die Öffnung 54 in der vierten Trennwand 38. Am Boden aller vier Kammern 40, 42, 44, 46 setzen sich die Schwebstoffe ab. Die sehr eng gehaltenen Öffnungen 54 begrenzen die Fließgeschwindigkeit des Wassers beim Übertritt von einer Kammer zur nächsten, so dass bereits abgeschiedene Schwebstoffe nicht oder nur zu einem geringen Anteil wieder aufgewirbelt werden.

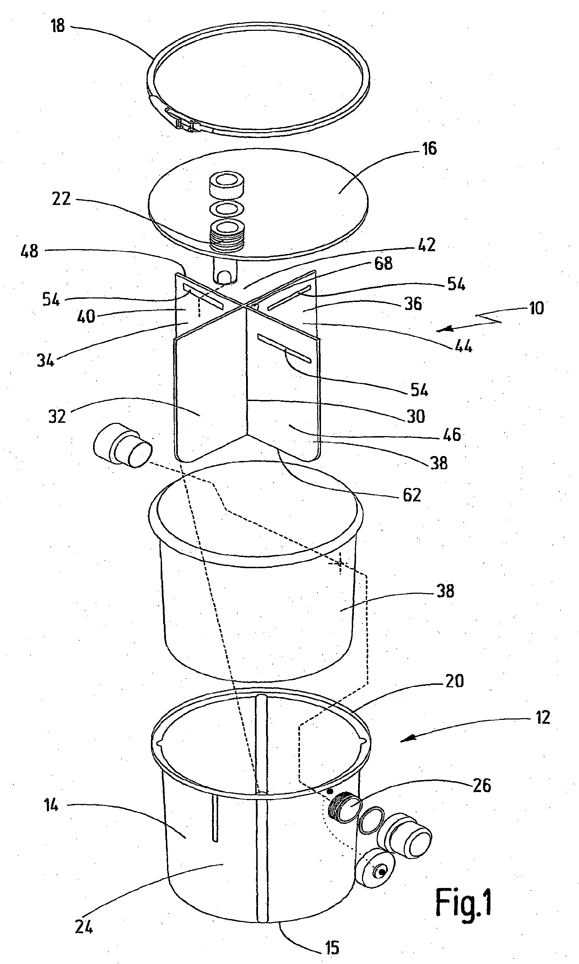

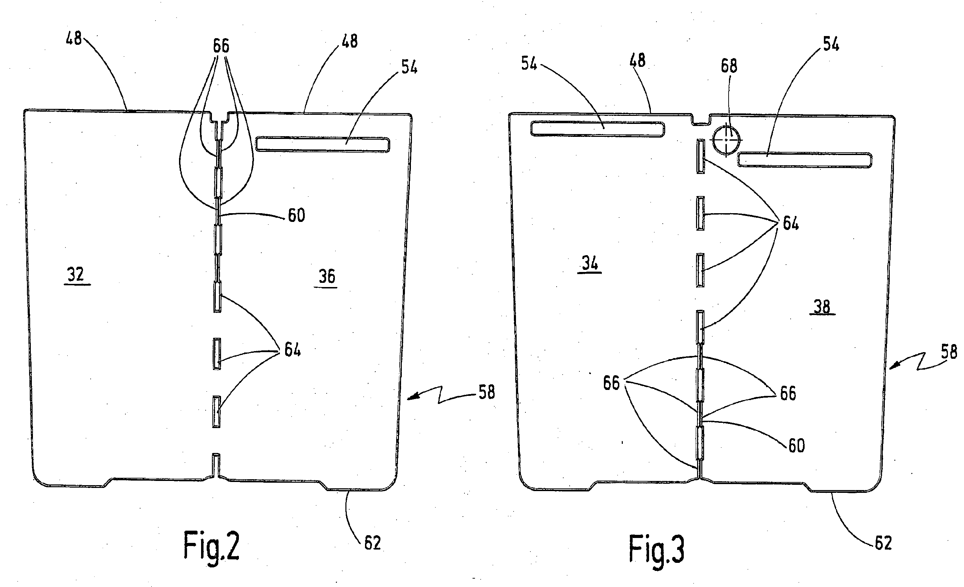

Die Trennwände 32, 34, 36, 38 sind im Detail in Fig. 2, 3 dargestellt. Die erste und die dritte Trennwand 32, 36 sind einstückig zu einem ersten Trennwandpaar 56 verbunden (Fig. 2), während die zweite und die vierte Trennwand 34, 38 zu einem zweiten Trennwandpaar 48 einstückig verbunden sind (Fig. 3). Das erste Trennwandpaar 56 weist einen sich über seine halbe Höhe erstreckenden, von der Oberkante 48 ausgehenden Schlitz 60 zwischen den Trennwänden 32, 36 auf, während das zweite Trennwandpaar 58 einen ebensolchen Schlitz 60 aufweist, der sich aber von einer Unterkante 62 aus zwischen den Trennwänden 34 und 38 erstreckt. In der Verlängerung der Schlitze 60 befinden sich in jedem Trennwandpaar 56, 58 Durchbrüche 64, in die Vorsprünge 66 im Bereich des Schlitzes 60 des jeweils anderen Trennwandpaars eingreifen, so dass die Trennwandpaare 56, 58 zu der in Fig. 1 gezeigten sternförmigen Anordnung miteinander verzahnt werden. Die Trennwände 32, 34, 36, 38 können zudem oberhalb ihrer Öffnung 54 mit einem Griffloch 68 zum besseren Greifen versehen sein. Ein solches Griffloch 68 ist in Fig. 1 in der dritten Trennwand 36, in Fig. 3 in der vierten Trennwand 38 dargestellt.

Zusammenfassend ist folgendes festzuhalten: Die Erfindung betrifft eine Vorrichtung 10 zur Abscheidung von Schwebstoffen aus einer Flüssigkeit, insbesondere zur Abscheidung von Gips aus Wasser, mit einem Behälter 12, der einen Flüssigkeitseinlass 22 und einen Flüssigkeitsauslass 26 aufweist, und der mittels Trennwänden 32, 34, 36, 38 in mehrere, in einer Fließrichtung aufeinanderfolgende Kammern 40, 42, 44, 46 unterteilt ist, wobei der Flüssigkeitseinlass 22 in eine erste der Kammern 40 mündet und wobei der Flüssigkeitsauslass 26 in eine letzte der Kammern 46 mündet. Erfindungsgemäß ist vorgesehen, dass mindestens ein Teil der Kammern 40, 42, 44, 46 und vorzugsweise jede Kammer 40, 42, 44, 46 mit der in der Fließrichtung auf sie folgenden Kammer 42, 44, 46 mittels einer Öffnung 54 in der zwischen den Kammern 40, 42, 44, 46 angeordneten Trennwand 34, 36, 38 kommuniziert, wobei die Öffnung 54 im Abstand und parallel zu einer Oberkante 48 der Trennwand 34, 36, 38 verläuft, und dass jede der Öffnungen 54 in einem größeren Abstand zum Behälterboden 15 angeordnet ist als die Öffnung 54 in der in Fließrichtung folgenden Trennwand 36, 38.

## Patentansprüche

1. Vorrichtung zur Abscheidung von Schwebstoffen aus einer Flüssigkeit, insbesondere zur Abscheidung von Gips aus Wasser, mit einem Behälter (12), der einen Flüssigkeitseinlass (22) und einen Flüssigkeitsauslass (26) aufweist, und der mittels Trennwänden (32, 34, 36, 38) in mehrere, in einer Fließrichtung aufeinander folgende Kammern (40, 42, 44, 46) unterteilt ist, wobei der Flüssigkeitseinlass (22) in eine erste der Kammern (40) mündet, wobei der Flüssigkeitsauslass (26) in eine letzte der Kammern (46) mündet, wobei mindestens ein Teil der Kammern (40, 42, 44, 46) mit der in der Fließrichtung auf sie folgenden Kammer (42, 44, 46) mittels einer Öffnung (54) in der zwischen den Kammern (42, 44, 46) angeordneten Trennwand (34, 36, 38) kommuniziert, wobei die Öffnung (54) im Abstand und parallel zu einer Oberkante (48) der Trennwand (34, 36, 38) verläuft, und wobei jede der Öffnungen (54) in einem größeren Abstand zum Behälterboden (15) angeordnet ist als die Öffnung (54) in der in Fließrichtung folgenden Trennwand (36, 38), **dadurch gekennzeichnet, dass** die Trennwände (32, 34, 36, 38) in der Draufsicht sternförmig angeordnet sind und sich von einer Mittelachse (30) des Behälters (12) bis zu einer oder mehreren Seitenwänden (24) des Behälters (12) erstrecken, wobei zwischen der letzten (46) und der ersten (40) Kammer eine Trennwand (32) ohne Öffnung angeordnet ist und dass vier Trennwände (32, 34, 36, 38) vorgesehen sind, wobei jeweils zwei in einem Winkel von 180° zueinander angeordnete Trennwände (32, 36; 34, 38) einstückig zusammenhängen, und wobei die Trennwandpaare (56, 58) mittels senkrecht zwischen den Trennwänden (32, 36, 34, 38) verlaufenden Schlitzen (60) zusammengesteckt sind.

2. Vorrichtung nach Anspruch 1, **dadurch gekennzeichnet, dass** die Öffnungen (54) als schmale Spalte ausgebildet sind, deren Breite mindestens fünfmal, vorzugsweise mindestens zehnmal so groß ist wie ihre Höhe.

3. Vorrichtung nach Anspruch 1 oder 2, **dadurch gekennzeichnet, dass** alle Öffnungen (54) identische Abmessungen aufweisen.

4. Vorrichtung nach einem der vorangehenden Ansprüche, **dadurch gekennzeichnet, dass** die Schlitze (60) jeweils über die halbe Höhe der Trennwandpaare (56, 58) verlaufen.

5. Vorrichtung nach einem der vorangehenden Ansprüche, **dadurch gekennzeichnet, dass** der Behälter (12) einen Deckel (16) aufweist, der auf den oberen Kanten (48) der Trennwände (32, 34, 36, 38) aufliegt.

6. Vorrichtung nach Anspruch 5, **dadurch gekennzeichnet, dass** der Deckel (16) an seiner Unterseite (50) Profile (52) aufweist, die die oberen Kanten (48) der Trennwände (32, 34, 36, 38) umgreifen.

7. Vorrichtung nach einem der vorangehenden Ansprüche, **dadurch gekennzeichnet, dass** der Behälter (12) mit einer Folie (28) ausgekleidet ist, in die die Trennwände (32, 34, 36, 38) eingesetzt sind.

## Claims

1. Apparatus for precipitation of suspended materials from a liquid, particularly for precipitation of gypsum from water, having a container (12), which has an inlet (22) for liquid and an outlet (26) for liquid, and which is divided, by means of partition walls (32, 34, 36, 38), into multiple chambers (40, 42, 44, 46) that follow one another in a flow direction, wherein the inlet (22) for liquid opens into a first one of the chambers (40), wherein the outlet (26) for liquid opens into a last one of the chambers (46), wherein at least a part of the chambers (40, 42, 44, 46) communicates with the chamber (42, 44, 46) that follows it in the flow direction by means of an opening (54) in the partition wall (34, 36, 38) disposed between the chambers (42, 44, 46), wherein the opening (54) runs at a distance from and parallel to a top edge (48) of the partition wall (34, 36, 38), and wherein each of the openings (54) is disposed at a greater distance from the container bottom (15) than the opening (54) in the partition wall (36, 38) that follows in the flow direction, **characterized in that** the partition walls (32, 34, 36, 38) are disposed, in a top view, in star shape, and extend from a center axis (30) of the container (12) all the way to one or more side walls (24) of the container (12), and that a partition wall (32) without an opening is disposed between the last (46) and the first chamber (40), and that four partition walls (32, 34, 36, 38) are provided, wherein two partition walls (32, 36; 34, 38), in each instance, that are disposed at an angle of 180° relative to one another, are connected in one piece, and wherein the pairs (56, 58) of partition walls are assembled by means of slots (60) that run perpendicular between the partition walls (32, 36, 34, 38).

2. Apparatus according to claim 1, **characterized in that** the openings (54) are configured as a narrow gap, the width of which is at least five times, preferably at least ten times as great as its height.

3. Apparatus according to claim 1 or 2, **characterized in that** the openings (54) have identical dimensions.

4. Apparatus according to one of the preceding claims, **characterized in that** the slots (60) run over half the height of the pairs (56, 58) of partition walls, in each instance.

5. Apparatus according to one of the preceding claims, **characterized in that** the container (12) has a lid (16) that lies on the top edges (48) of the partition walls (32, 34, 36, 38).

6. Apparatus according to claim 5, **characterized in that** the lid (16) has profiles (52) on its underside (50), which engage around the top edges (48) of the partition walls (32, 34, 36, 38).

7. Apparatus according to one of the preceding claims, **characterized in that** the container (12) is lined with a film (28) into which the partition walls (32, 34, 36, 38) are inserted.

## Revendications

1. Dispositif pour séparer des substances en suspension d'un liquide, en particulier pour séparer du plâtre de l'eau, comprenant un récipient (12) qui présente une entrée de liquide (22) et une sortie de liquide (26) et qui est subdivisé au moyen de cloisons (32, 34, 36, 38) en plusieurs chambres (40, 42, 44, 46) se succédant dans le sens d'écoulement, l'entrée de liquide (22) débouchant dans une première des chambres (40) et la sortie de liquide (26) débouchant dans une dernière des chambres (46), au moins une partie des chambres (40, 42, 44, 46) communiquant avec la chambre (42, 44, 46) qui la suit dans le sens d'écoulement au moyen d'une ouverture (54) dans la cloison (34, 36, 38) disposée entre les chambres (42, 44, 46), l'ouverture (54) s'étendant à distance et parallèlement à un bord supérieur (48) de la cloison (34, 36, 38), et chacune des ouvertures (54) étant disposée à une plus grande distance par rapport au fond (15) du récipient que l'ouverture (54) dans la cloison (36, 38) suivante dans le sens d'écoulement,
**caractérisé en ce**
**que** les cloisons (32, 34, 36, 38) sont disposées en étoile vu de dessus et s'étendent d'un axe médian (30) du récipient (12) jusqu'à une ou plusieurs parois latérales (24) du récipient (12), une cloison (32) sans ouverture étant disposée entre la dernière (46) et la première (40) chambre, et
**que** quatre cloisons (32, 34, 36, 38) sont prévues, à chaque fois deux cloisons (32, 34, 36, 38) disposées à un angle de 180° l'une par rapport à l'autre étant liées en une seule pièce et les paires de cloisons (56, 58) étant assemblées par emboîtement au moyen de fentes (60) s'étendant perpendiculairement entre les cloisons (32, 34, 36, 38).

2. Dispositif selon la revendication 1, **caractérisé en ce que** les ouvertures (54) sont réalisées sous la forme de fentes étroites dont la largeur est au moins cinq fois, de préférence au moins dix fois plus grande que leur hauteur.

3. Dispositif selon la revendication 1 ou 2, **caractérisé en ce que** toutes les ouvertures (54) présentent des dimensions identiques.

4. Dispositif selon l'une des revendications précédentes, **caractérisé en ce que** les fentes (60) s'étendent chacune sur la moitié de la hauteur des paires de cloisons (56, 58).

5. Dispositif selon l'une des revendications précédentes, **caractérisé en ce que** le récipient (12) présente un couvercle (16) qui repose sur les bords supérieurs (48) des cloisons (32, 34, 36, 38).

6. Dispositif selon la revendication 5, **caractérisé en ce que** le couvercle (16) présente sur sa face inférieure (50) des profils (52) qui enserrent les bords supérieurs (48) des cloisons (32, 34, 36, 38).

7. Dispositif selon l'une des revendications précédentes, **caractérisé en ce que** le récipient (12) est revêtu d'une feuille (28) dans laquelle les cloisons (32, 34, 36, 38) sont insérées.
